# EUROPÄISCHE PATENTSCHRIFT

(11) **EP 0 710 904 B1**
(45) Veröffentlichungstag und Bekanntmachung des Hinweises auf die Patenterteilung: **07.10.1998**
(21) Anmeldenummer: 94116825.4
(22) Anmeldetag: 25.10.1994
(51) Int. Cl.: G05B 19/418, H04L 29/06

(54) **Backplane-Steuerung für Spinnereimaschine**
Backplane-control for spinning-machine
Système de contrôle backplane pour machine à filer

(43) Veröffentlichungstag der Anmeldung: 08.05.1996
(73) Patentinhaber: Rieter Ingolstadt Spinnereimaschinenbau AG, 85055 Ingolstadt (DE)
(72) Erfinder: Wiegand,Jens, 85077 Manching (DE)
(74) Vertreter: Leonhard, Frank Reimund, Dipl.-Ing.

(56) Entgegenhaltungen:
- EP-A- 0 135 881
- EP-A- 0 298 396
- EP-A- 0 449 458
- WO-A-93/25948
- US-A- 4 835 699
- ELEKTRONIK, Bd.40, Nr.23, 12. November 1991, MUNCHEN DE Seiten 200 - 206 W. MÜNCH 'Unterstützen TCP/IP- und ISO/OSI-Protokolle'
- CONFERENCE RECORD OF THE 1993 IEEE INDUSTRY APPLICATIONS CONFERENCE TWENTY-EIGHTH IAS ANNUAL MEETING, PART III, 3. Oktober 1993, TORONTO, CANADA Seiten 2388 - 2392 KOZIOL ET AL. 'CIE INTEGRATED SYSTEM FOR THE CPCM (COUPLED PICKLE LINE AND TANDEM COLD MILL) AT DOFASCO'S HAMILTON WORKS'
- IBM TECHNICAL DISCLOSURE BULLETIN, Bd.37, Nr.7, Juli 1994, NEW YORK, USA Seiten 261 - 264 R. S. HASKELL ET AL. 'Computer Integrated Controller for Numerically Controlled Machines and Process Tools'
- 15TH ANNUAL CONFERENCE OF IEEE INDUSTRIAL ELECTRONICS SOCIETY, VOLUME I - POWER ELECTRONICS, 6. November 1989, PHILADELPHIA, USA Seiten 675 - 680 J.-D. DECOTIGNIE 'Integrating the Numerical Controller and the FMS'
- ELEKTRONIK, Bd.40, Nr.22, Oktober 1991, MUNCHEN DE Seiten 59 - 69 R. MÜLLER 'LON - das universelle Netzwerk, Teil 1'
- CONTROL ENGINEERING, Bd.39, Nr.5, 15. März 1992, NEW YORK US Seiten 35 - 37 P. SKOKOWSKI 'Penny-Pinching Networks for Distributed Control'
- MECHATRONICS, Bd.4, Nr.2, März 1994, OXFORD GB Seiten 159 - 172 LARS-BERNO FREDRIKSSON 'CONTROLLER AREA NETWORKS AND THE PROTOCOL CAN FOR MACHINE CONTROL SYSTEMS'
- 24TH ISATA INTERNATIONAL SYMPOSIUM ON AUTOMOTIVE TECHNOLOGY AND AUTOMATION, 20. Mai 1991, FLORENCE, ITALY Seiten 585 - 598 T. COFFEY 'FACTORY AUTOMATION NETWORKING STANDARDS FOR DISTRIBUTED MANUFACTORING'

## Beschreibung

Das technische Gebiet der Erfindung sind die Spinnereimaschinen und dort ein Verfahren zum Steuern einer aus mehreren Spinnereimaschinen bestehenden Gruppe von Spinnereimaschinen ("Spinnereimaschinengruppe") und ein Steuerungsnetzwerk zum Aufbau einer Systemsteuerung der Spinnereimaschinengruppe.

Eine Spinnereimaschine besteht aus einer Vielzahl von Spinnstellen, derzeit werden etwa 280 Spinnstellen zu einer Spinnereimaschine zusammengefaßt. Für viele Anwendungen ist es allerdings erforderlich, mehrere Spinnereimaschinen zusammenzuschalten, wobei die Steuerungszentrale ein erhebliches Gewicht bekommt. Geht man von der Spinnereimaschine R1 der Rieter AG gemäß Prospekt 1431 d vom November 1992 aus, so können bis zu 32 Rotor-Spinnmaschinen an die dortige Steuerungszentrale SCC II angeschlossen werden. Jede dieser Rotor-Spinnmaschinen kann bis zu 280 Spinnstellen haben. Daraus wird ersichtlich, welche Komplexität und Größe ein solches System annehmen kann, wenn zusätzlich mehrere Maschinengruppen der genannten Größe in Großspinnereien zusammengeschaltet werden, um einen Großverbund zu bilden.

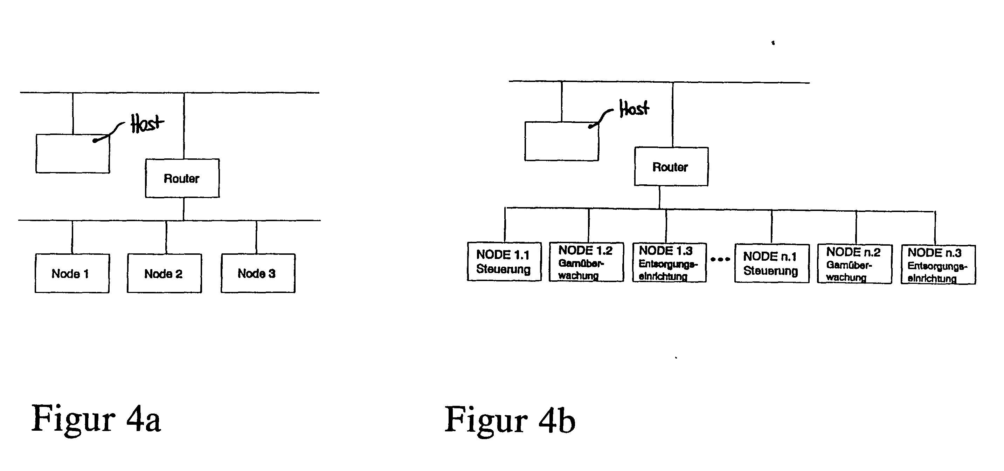

Es ist aus vorgenanntem Stand der Technik ersichtlich, daß eine Spinnereimaschinengruppe im Verbund mehrerer Spinnereimaschinen nur dann steuerbar und überwachbar bleibt, wenn man sich der Netzwerkstechnik bedient. Beispiele für mögliche Netzwerke im Stand der Technik sind **die Figuren 4a, 4b**, in denen zwei Topologien vereinfachend grafisch dargestellt werden. Diese Topologien arbeiten mit dem Netzwerk Ethernet, dessen Protokoll Stand der Technik ist und mit CSMA/CD (**C**arrier **S**ense **M**ultiple **A**ccess with **C**ollision **D**etect) bezeichnet wird. Es arbeitet so, daß eine Station (ein "Node") ein Daten- oder Informationspaket sendet, wenn sie zuvor geprüft hat, ob bereits ein anderer Node aktiv ist. Ist ein anderer Node (Knoten oder Station) aktiv, so wartet die erstgenannte solange, bis das Netzwerks-Kabel frei ist. Für den Fall, daß zwei oder mehrere Stationen durch Zufall gleichzeitig senden (sogenannte Kollisionen), erkennen sie dies durch aktives Vergleichen der gesendeten Daten und den auf dem Kabel gemessenen Daten. Sofern die gemessenen Daten mit den gesendeten Daten nicht übereinstimmen, wird der Sendevorgang unterbrochen und erst nach einer Wartezeit wiederholt. Die Wartezeit wird bei dem verwendeten Protokoll mit Hilfe eines Zufallsgenerators ermittelt, der bei Wiederholungen exponentiell ansteigende Verzögerungswerte liefert. Dadurch kann verhindert werden, daß zwei Stationen wiederholt die gleiche Wartezeit verwenden und so auf Dauerkollision geschaltet sind. Kollisionsfälle bringen Zeitverzögerung. Neben der Zeitverzögerung durch Kollisionsfälle ist an den bekannten Topologien auch erkennbar, daß eine Kopplung zwischen zwei Stationen (beispielsweise Node 1 und Node 2 oder Node 1.1 und Node 1.2) das Netzwerk für alle anderen Stationen blockiert, die während der Kommunikation von zwei Stationen nicht das Netzwerk verwenden können. Auch der eingezeichnete "Router" (Kommunikation vom unteren Netzwerk zum höherliegenden Netzwerk in Figur 4b), an dem der Host (auch mehrere Hosts) angekoppelt ist, belastet das Netzwerk.

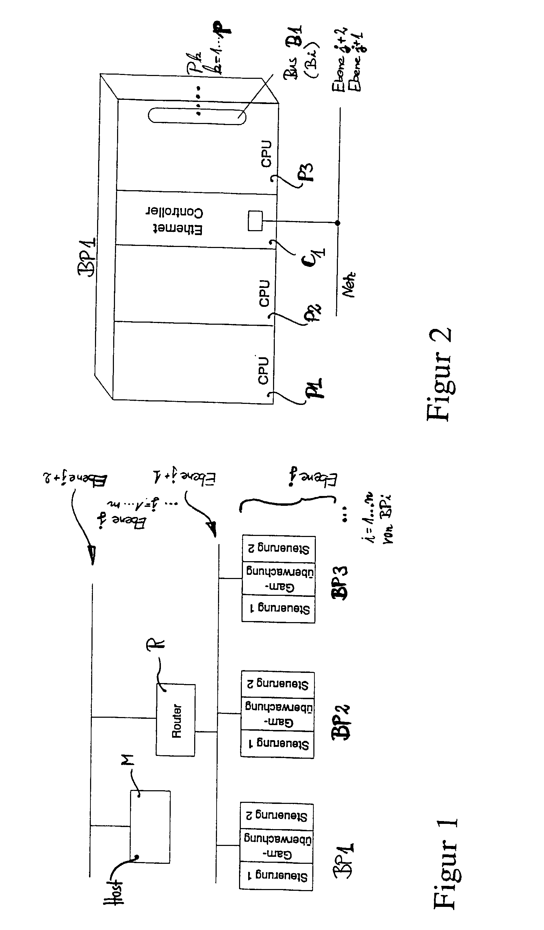

**Die WO-A 93/25948** (Dow Chemical) beschreibt ein Kommunikationssystem (front end communication system) und ein Verfahren zur Steuerung von Prozesscomputern. Es werden verschiedene Ebenen der Kommunikation eingesetzt (vgl. dort Figur 1, Seite 18, Zeilen 10 ff.), jedoch "Identifiers" im Datenprotokoll eingesetzt, die von "Bridges" erkannt werden, um im Kommunikationsprotokoll auszufiltern und auszuwählen, welches Datenprotokoll zwischen zwei jeweils unterschiedlichen Ebenen durchgeschaltet wird. Es werden also mehrere Protokolle verwendet.

**EP-A 449 458** (Reflex) verwendet NFI (spezielle Interfaces), um verschiedene Digitalgeräte in einer automatisierten Prozess-Steuerung an ein vorbestimmtes Protokoll, dort das MAP anzupassen (vgl. dort Seite 2, Zeile 43 ff.). Der Stand der Technik wird in diesem Dokument so beschrieben (vgl. dort Seite 2, Zeilen 17 ff.), daß ein Standard-Protokoll (das MAP, Version 3.0) einen Standard-Set an Diensten beinhaltet, die als MMS bezeichnet werden und die erwähnten Digitalgeräte steuern und überwachen. In dem übergeordneten Protokoll MAP ist also ein anderes Protokoll MMS integriert. Nur dieses Protokoll verstehen die Interfaces bzw. Digitalgeräte.

**In Elektronik 23/1991** (W. Münch) "Unterstützen TCP/IP- und ISO/OSI-Protokolle", Seiten 200-206 wird ein Rückwandbus (Seite 201, 203) mit Bezug auf ein TCP/IP-"Transportsystem" beschrieben. Zur Verwaltung (Administration) werden "diverse Administrationsprogramme zum Verändern und Abfragen verschiedener interner Tabellen" vorgeschlagen. Hinsichtlich der Protokolle in der Automatisierungstechnik sind auf Seite 203, mittlere Spalte, zwei Protokollsäulen (TCP/IP und ISO/OSI) erwähnt; Spinnereimaschinen werden nicht angesprochen.

**Die US-A 4,835,699** (Mallard) offenbart eine automatisierte verteilte Steuerung für eine Textil-Webmaschine, die dem Oberbegriff des Anspruchs 1 und 8 entspricht. Speziell wird zum Verständnis dieser Druckschrift verwiesen auf die dortigen Figuren 1, 2B, 3 und 4 sowie die Spalte 8, Zeilen 56 bis Spalte 9, Zeile 11. Dort ist eine Host-System erläutert (dort 52), das über einen Multiplexer und über eine serielle Verbindung (dort 66) mit einem Kommunikations-Mikroprozessor (dort 76) verbunden ist. Der erwähnte Mikroprozessor koppelt über ein Link-Interface (dort 98) zu einem Systembus (dort 96), an dem ein einzelner Mikroprozessor 90 angeschlossen ist. An dem Systembus, der nicht multiprozessorfähig ist, sind eine Vielzahl von anderen Interfaces angeschlossen, die den Webstuhl steuern. In dem Kommunikations-Mikroprozessor 76 ist ein DU4P-Protokoll realisiert, daß in der erwähnten Passage der Spalte 8 als bekannt bezeichnet wird, das aber gemäß Figur 4 dieser Druckschrift ein weiteres Kommunikations-Link-Interface benötigt, um mit dem Systembus zu kommunizieren. Selbst wenn in dieser Druckschrift ein DU4P-Protokoll beschrieben ist, so ist das Protokoll auf dem Systembus ein solches Protokoll, das von dem Host oder dem Kommunikations-Mikroprozessor ohne ein weiteres Kommunikations-Interface (dort mit 98 bezeichnet) nicht verstanden wird.

Um die **Funktionsfähigkeit** der im Stand der Technik beschriebenen Spinnereimaschinensteuerung (mit Netzwerk) zu verbessern und um das unmittelbare Zusammenwirken aller im Verbund geschalteter Elemente des Netzwerkes - unter Herabsetzung von Zugriffskonflikten - zu beschleunigen, schlägt die Erfindung vor, das Datenkommunikations-Protokoll zum Austausch und zur Übermittlung von Betriebsdaten und Meßwerten **der höheren** Kommunikationsebene auch auf **der niedereren** Kommunikationsebene zu verwenden (Anspruch 1, 8). Zur Durchführung dieser Vereinheitlichung von Netzwerks-Protokollen wird vorgeschlagen, eine Bus-Backplane zu verwenden, auf der mehrere Komponenten, insbesondere mehrere CPUs (zentrale Recheneinheiten) miteinander gekoppelt sind. Je eine Bus-Backplane steht stellvertretend für eine Spinnereimaschine mit ihrer Vielzahl von Spinnstellen.

Die Datenkommunikation ermöglicht die verbesserte Steuerung der Maschinengruppe; ohne weiteres kann die Kommunikation auch zur Überwachung der Maschinengruppe verwendet werden.

Die zuvor erwähnte hardware-technische Bus-Backplane ist nicht an eine bestimmte Architektur gebunden, es können Bus-Backplanes von Intel (Multibus I,II) oder Motorola (VME) oder andere verwendet werden (Anspruch 2). Die Bus-Backplane ist einerseits eng mit der Maschinensteuerung verwandt und andererseits eng mit dem Netzwerk. Die enge Kopplung durch den hardware-technischen Aufbau wird unterstützt durch die erfinderische Software-Kopplung, bei der das Kommunikationsprotokoll auf der Bus-Backplane und das Kommunikationsprotokoll auf der hierarchisch höheren Kommunikationsebene des ersten lokalen Busses dasselbe, insbesondere ein standardisiertes Protokoll ist (Anspruch 9).

Das Bussystem mit der Backplane kann Interfaceschaltungen (Schnittstellen) verschiedenster Art aufnehmen.

Mit der Erfindung wird ein nicht deterministischer Bus sehr nahe zur Spinnereimaschine herabgeführt, und zwar hardware-technisch so nahe, wie ein übliches Netzwerk (z.B. nach dem Ethernet-Prinzip) nicht reichen würde. Die Spinnereimaschine muß andererseits auch deterministische Aufgaben erfüllen können, die zeitkritisch sind. Dazu werden an der Bus-Backplane entsprechende Prozessoren angekoppelt, die deterministische Steuerungen und Regelungen und das äquidistante Erfassen von Abtastwerten ermöglichen. Vorteilhaft ist deshalb die Bus-Backplane als Multiprozessor-Bus-Backplane aufgebaut (Anspruch 3, 10). Wird eine Multiprozessor-Bus-Backplane verwendet, so ist das zugehörige Standardprotokoll ebenfalls multiprozessorfähig (Ansprüche 9,13), z.B. entspricht es dem TCP/IP-Protokoll.

Die Funktionsfähigkeit der Spinnereimaschinen-Steuerung wird mit der Erfindung in zeitlicher Hinsicht erheblich verbessert. Aber nicht nur die verbesserte Geschwindigkeit wird mit der Erfindung begründet, auch die bessere Strukturierung und flexiblere Verbindung von Bussystemkomponenten wird möglich, sogar bei Verwendung von Bus-Backplanes unterschiedlicher Herkunft (Anspruch 2). Trotz der gegebenen Widrigkeiten kann die Erfindung sowohl die eingangs angesprochenen Zugriffskonflikte vermeiden, als auch Servicefreundlichkeit zur Verfügung stellen und damit in erheblichem Maße die Programmierkosten senken. Auch wird das Netzwerk geringer durch "Overhead" belastet.

Die Bus-Backplanes, die jeweils einer Spinnereimaschine zugeordnet sind, werden in einem lokalen Netzwerk (Bus) zusammengeschaltet, so daß eine erste Gruppe von Spinnereimaschinen über diesen lokalen Bus miteinander gekoppelt ist (Anspruch 1). Mehrere der lokalen Busse können über jeweilige Router an ein übergeordnetes Netzwerk gekoppelt sein (Anspruch 7), so daß eine Haupt-Steuerung (Host) Zugriff über jeweilige Router auf jeweilige Unternetzwerke ("Subnets") hat, die ihrerseits in mehrere Bus-Backplanes strukturiert sind. Bus-Backplane und Subnet haben dieselbe Topologie (sprich: dasselbe Datenkommunikations-Protokoll), was die Kommunikation in erheblichem Maße beschleunigt und strukturell vereinfacht.

Eine Netzwerks-Gestaltung, die für die meisten Netzwerks-Steuerungen von Spinnereimaschinen ausreicht, besteht aus drei Ebenen, der Ebene j, der Ebene j+1 und der Ebene j+2. Die Ebene j ist diejenige der Bus-Backplanes. Hier sind mehrere Bus-Backplanes BPi enthalten und über einen Netzwerks-Zugriff auf einen lokalen Bus geschaltet, der aus einem Kabel besteht. Der lokale Bus ist die höhere Ebene j+1. Das Datenkommunikations-Protokoll auf der Ebene j+1 und das in den Bus-Backplanes BPi - der Ebene j - ist dasselbe. Von der Ebene j+1 führt ein Router zu einer übergeordneten Ebene j+2, an der die Zentralsteuerung - der "Host" - angekoppelt ist. Es bestehen also drei Ebenen, die Ebene der Bus-Backplanes, die Ebene des lokalen Busses, der der höhergeordnete Bus ist, und die Ebene des Hosts, der am übergeordneten Bus angekoppelt ist. Zwischen der übergeordneten Ebene j+2 und der unmittelbar darunter liegenden Ebene j+1 besteht nicht dasselbe Datenkommunikations-Protokoll; nur zwischen der Ebene j+1 und der darunterliegenden Ebene - der Ebene j der Bus-Backplanes - besteht Protokollidentität.

Die Verwendung des allgemeinen Index j zeigt, daß diese Konfiguration von Ebenen bei stärker hierarchisch gegliederten Systemen nach aufwärts und abwärts verschoben werden kann, zumeist sind allerdings drei Ebenen sinnvoll, um die Erfindung gezielt einsetzen zu können (Anspruch 5), von denen eine Ebene mit dem Protokoll einer typischen Netzwerksanwendung arbeitet und die beiden darunterliegenden Ebenen mit einem anderen Protokoll arbeiten, das zwar auch noch netzwerksfähig ist, das aber sehr eng an determinitischen Bussen orientiert ist.

Das Verständnis der Erfindung erleichtern die beigefügten Figuren, anhand derer einige Ausführungsbeispiele erläutert werden sollen.
**Figur 1** ist ein Beispiel mit drei Bus-Backplanes BP1, BP2 und BP3 und drei hierarchisch gestaffelten Netzwerks-Bussen, Ebene j, Ebene j+1 und Ebene j+2, im Beispiel j=1.

**Figur 2** greift eine Bus-Backplane der Figur 1 heraus, die BP1, die einen Zugriffs-Baustein C1 enthält, der von der Bus-Backplane den Zugriff auf den netzwerks-orientierten Bus der Ebene j+1 (oder in einem weiteren Ausführungsbeispiel auf den diesem übergeordneten Bus der Ebene j+2) erlaubt.

**Figur 3** verdeutlicht in schematischer Ansicht eine VME-Bus-Backplane, die über einen Prozessor (eine CPU) auf einen AT-Bus abwärts gekoppelt ist und die aufwärts über VCOM auf den lokalen TCP/IP-Bus der Ebene j+1 der Figur 1 zugreifen kann. In diesem Beispiel ist die BP1 stellvertretend für eine einzelne Maschine, mit beispielsweise 280 Spinnstellen. Die bildlich dargestellte Kommunikationsebene ist also "innerhalb der Spinnereimaschine", während die Kopplungen nach außen (zum lokalen Bus) und zu den anderen zentralen Einheiten "als außerhalb der Maschine" angesehen werden.

**Die Figur 1** veranschaulicht eine beispielhafte Kombination von drei Bus-Backplanes BP1, BP2, BP3, die auf einem lokalen Bus (Ebene j+1) zusammengeschaltet werden. Von dem lokalen Bus führt ein Router R zu einem übergeordneten Bus, der in der Figur 1 mit "Ebene j+2" bezeichnet ist. An ihm ist ein Hostsystem M angeschlossen, der die Zentralverwaltung aller potentiell an den übergeordneten Bus der Ebene j+2 angekoppelten Router R übernimmt. Die mehreren Router R können sich in einem erweiterten System durch Ergänzung der 4 Komponenten R, BP1, BP2, BP3 an dem übergeordneten Bus j+2 ergeben. Das System der Figur 1 ist insoweit nicht beschränkt. Das System ist aber auch nicht in der Anzahl der angeschlossenen Backplanes BPi an dem lokalen Bus der Ebene j+1 beschränkt, es können eine Vielzahl dieser Backplanes dort angeschlossen sein. Alle diese Backplanes haben jedoch das gleiche Datenkommunikations-Protokoll, das im Beispiel zu TCP/IP gewählt ist. Ebenso ist UDP/IP möglich.

Eine Backplane ist **in Figur 2** herausgegriffen, beispielhaft ist die Backplane 1 (BP1) gewählt. An ihr ist erkennbar, daß mehrere Zentraleinheiten (CPU) an der Backplane angeschlossen sind, im Beispiel der Figur 2 sind es drei CPUs P1, P2 und P3. Eine dieser CPUs, hier die CPU P1 ist über die Backplane BP1 mit dem Ethernet-Controller C1 verbunden, der die Backplane BP1 auf Netzebene koppelt. Als Netzebene kommt die unmittelbar (logistisch) über der Backplane BP1 liegende Ebene j+1 der Figur 1 in Frage; als Ebene kommt aber auch die Ebene j+2 der Figur 1 in Frage, die über einen entsprechenden Controller C mit der Backplane BP1 direkt gekoppelt sein kann. Sowohl die jeweils eine Kopplung als auch beide Kopplungen sind abhängig von dem jeweiligen Anwendungsfall schaltbar; werden beide Kopplungen verwendet, so werden zwei Netzwerks-Steuereinrichtungen (Ethernet-Controller) C verwendet, einer koppelt die Backplane BP1 an die Ebene j+2, der andere koppelt die Backplane BP1 an die Ebene j+1.

Die Backplane BP1 ist schematisch ein Hardware-Datenbus und ein Adressenbus mit einer zugehörigen Anzahl von Steuerleitungen. Insgesamt wird er als Bus B1 bezeichnet.

Aus der Zusammenschau der Figuren 1 und 2 wird die Netzwerks-Topologie deutlich. In vertikaler Richtung sind drei Ebenen j, j+1 und j+2 dargestellt, wobei j im allgemeinen ganze Zahlen von 1 bis m darstellen kann. In horizontaler Richtung besteht die Ebene j aus mehreren Backplanes BPi, wobei i ganze Zahlen von 1 bis n annehmen kann. Jede Backplane BPi ihrerseits kann eine Mehrzahl von Zentraleinheiten Pk enthalten, wobei k ganze Zahlen von 1 bis p darstellt; p ist also Repräsentant für ein Multiprozessor-System, das auf einer Backplane installiert ist. Als Backplane wird eine solche Platine verstanden, die eine Mehrzahl von Lagen hat, in denen die auf ihr angeordneten Steckplätze mit Leitungen verbunden sind. Verglichen werden kann mit ihr im groben eine typische AT-Busplatte, die allerdings nicht multiprozessorfähig ist, wie die Backplane BP der Figuren 1 und 2. Erst durch die Multiprozessorfähigkeit wird es möglich, daß das Kommunikationsprotokoll auf dem Netz der Ebene j+1 dem Kommunikationsprotokoll auf der Backplane entspricht.

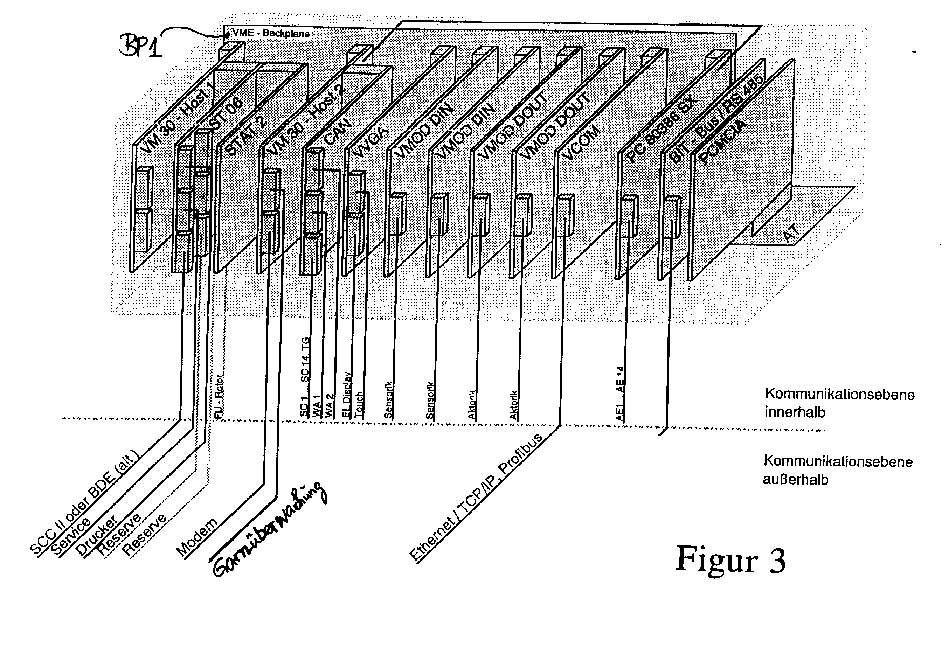

Im Gegensatz zu den **Figuren 1 und 2** sowie der noch zu erläuternden **Figur 3**, die Ausführungsbeispiele der Erfindungen darstellen, sind Schaltungen des Standes der Technik in den Figuren 4a und 4b erläutert. Zu der Figur 4a wurde eingangs schon erläutert, warum diese Topologie zeitintensiv, kollisionsträchtig und wenig strukturiert ist. Die Netzwerks-Topologie der Figur 4b, die eine mögliche Alternative zu derjenigen der Figur 4a wäre, läßt ungeklärte Verantwortlichkeiten und nicht kalkulierbare Lastprobleme zwischen den einzelnen Funktionseinheiten (als Node 1.1 bis Node n.3 bezeichnet). Das resultiert daraus, daß viele Funktionseinheiten (Nodes) nicht vom selben Hersteller stammen und daher unterschiedlich aufgebaut sind. Jeder dieser Nodes kann eine unterschiedliche Architektur aufweisen, so daß im gemeinsamen Netzwerksbus, der über den Router zum Hostsystem führt, **keine Gemeinsamkeiten** bestehen, es sei denn jedes der Systeme würde eine entsprechend angepaßte Netzwerks-Kopplungskarte erhalten. Diese Kopplungskarte verlangsamt das System und erhöht die Wahrscheinlichkeit von Kollisionen, besonders dann, wenn die zu beispielsweise einer Maschine gehörenden Nodes 1.1, 1.2 und 1.3 miteinander kommunizieren, wobei der gesamte restliche Bus funktionell blockiert wird.

Demgegenüber schaffen die Netzwerks-Topologien mit der Backplane und dem gemeinsamen Datenkommunikations-Protokoll auf Backplane und übergeordneter Netzwerks-Verbindung Übersichtlichkeit, Kollisionsvermeidung und Geschwindigkeitserhöhung. Das verdeutlicht auch **die Figur 3**, die die Backplane BP1 der Figur 2 schematisch anhand eines VME-Busses realisiert. Eine Kopplungskarte PC 80386 SX bildet eine Verbindung in einen AT-Bus, der deterministisch ist. Die Steckkarte VCOM bildet die Kopplung C1 der Figur 2, die von der Backplane BP1 zu dem lokalen Bus der Ebene j+1 der Figur 1 führt.

Um Mißverständnisse bei der Bezeichnung der Busse zu vermeiden, wird betont, daß der lokale Bus derjenige der Ebene j+1 ist, nicht derjenige der Backplane BP1. Dieser Bus befindet sich auf der Ebene j, eine Ebene unterhalb der Netzwerks-Ebene j+1. Der ersten Netzwerks-Ebene j+1 übergeordnet ist die Ebene j+2, die in der Figur 3 nicht ersichtlich ist, die aber dann erkennbar wird, wenn mehrere VCOM auf der Netzwerks-Ebene j+1 zusammengeschaltet werden und ein Router R diesen lokalen Bus j+1 auf den übergeordneten Bus j+2 koppelt.

Neben der soeben skizzierten Variante ist es auch möglich, VCOM der Figur 3 zusammen mit VM30, der die CPU P1 der Figur 2 in der Skizze gemäß Figur 3 darstellt, als direkten Router R zum übergeordneten Bus der Ebene j+2 zu verwenden. Der Router R ist dann physisch in zwei getrennten Karten enthalten, VM30 und VCOM.

Das technische Gebiet der Erfindung sind die Spinnereimaschinen, dort die Steuerung einer Großzahl von Spinnereimaschinen über ein oder mehrere Netzwerke. Die Erfindung schlägt zur Beschleunigung und zum verbesserten unmittelbaren Zusammenwirken aller im Netzwerksverbund geschalteter Stationen vor, das Datenkommunikations-Protokoll eines als Backplane (BPi) gestalteten Busses und das Datenkommunikations-Protokoll (TCP/IP) der höheren Kommunikationsebene - die logisch oberhalb der Backplane angesiedelt ist - identisch zu gestalten.

## Patentansprüche

1. **Spinnereimaschinen-Steuerungsnetzwerk** zum Steuern einer Spinnerei-Maschinengruppe im Verbund mehrerer Spinnereimaschinen, die ihrerseits eine Vielzahl von Spinnstellen enthalten, dadurch gekennzeichnet, daß
(a) eine Kommunikationsebene (Ebene j; j=1...m) eine multiprozessorfähige Bus-Backplane (BPi;i=1...n) aufweist, auf der mehrere Komponenten (Pk; k=1...p) miteinander gekoppelt sind, um Daten auszutauschen;
(b) je Bus-Backplane (BPi) eine der Spinnereimaschinen anschließbar ist und mehrere Bus-Backplanes (BP1,BP2,BP3) zu einem ersten hierarchisch höheren lokalen Bus (Ebene j+1) für eine erste lokale Maschinengruppe gekoppelt sind und dieser lokale Bus an einen ihm übergeordneten Bus (Ebene j+2) gekoppelt ist, wobei der erste lokale Bus und die mehreren Bus-Backplanes (BP1,BP2,BP3) über ein gleiches Software-Protokoll gekoppelt werden.

2. Steuerungsnetzwerk nach Anspruch 1, bei dem mehrere Bus-Backplanes (BPi) unterschiedlicher Architektur vorgesehen sind.

3. Steuerungsnetzwerk nach Anspruch 1 oder 2, bei dem die Bus-Backplane (BPi) eine Mehrlagenplatine ist, auf der eine Mehrzahl von Steckplätzen für die Komponenten, insbesondere CPU's, vorgesehen sind.

4. Steuerungsnetzwerk nach einem der vorigen Ansprüche, bei dem an einer Bus-Backplane (BPi) mindestens eine Spinnereimaschinen-Steuerung und eine Garnüberwachung als Komponenten anschließbar sind.

5. Steuerungsnetzwerk nach einem der vorigen Ansprüche, bei dem der übergeordnete Bus (Ebene j+2) und der hierarchisch höhere Bus (Ebene j+1) zum Datenaustausch netzwerksorientiert sind und zur Kopplung von Meßwerten und Befehlen eine Leitung vorgesehen ist.

6. Steuerungsnetzwerk nach einem der vorigen Ansprüche, bei dem sich auf jeweils einer Bus-Backplane (BPi) die Kommunikationsebene jeweils einer Spinnmaschine mit einer Vielzahl von Spinnstellen befindet.

7. Steuerungsnetzwerk nach einem der vorigen Ansprüche, bei dem mehrere Router (R) mehrere lokale Busse, von denen jeder einer Maschinengruppe zugeordnet ist, an das übergeordnete Netzwerk koppeln, um dort die Steuerung aller Spinnereimaschinen der Spinnerei über das übergeordnete Netzwerk (Ebene j+2) zu ermöglichen.

8. Verfahren zum Steuern einer Spinnerei-Maschinengruppe im Verbund mehrerer Spinnereimaschinen, die ihrerseits eine Vielzahl von Spinnstellen enthalten, unter Verwendung des Steuerungsnetzwerks nach einem der vorigen Ansprüche,
dadurch gekennzeichnet, daß Datenaustausch auf mehreren hierarchisch unterschiedlichen Ebenen (j;j=1...m) vorgesehen ist und das Datenaustausch-Protokoll zum Austausch und zur Übermittlung von Betriebsdaten und Meßwerten einer hierarchisch höheren Ebene (Ebene j+1) das Protokoll einer hierarchisch niedereren Ebene (Ebene j) ist.

9. Verfahren nach Anspruch 8, bei dem das Protokoll ein Standard-Protokoll, insbesondere das TCP/IP-Protokoll ist.

10. Verfahren nach Anspruch 8 oder 9, bei dem die niederere Ebene (Ebene j) als Multiprozessor-Ebene eine Mehrzahl von CPUs aufweist und die höhere Ebene (Ebene j+1) über einen Router (R) an eine übergeordnete Ebene (Ebene j+2) gekoppelt ist.

11. Verfahren nach Anspruch 10, bei dem die übergeordnete Ebene (Ebene j+2) des Datenaustauschs diejenige ist, mit der die Systemsteuerung als Hostsystem gekoppelt wird.

12. Verfahren nach Anspruch 10 oder 11, bei dem eine CPU (P1) der niedereren Ebene (Ebene j) mit einer an ihren Bus (B1) gekoppelten Steuerung (C1) auf das Netz der höheren Ebene (Ebene j+1) und/oder über einen separaten Router (R) auf das Netz der übergeordneten Ebene (Ebene j+2) zugreift, wobei die übergeordnete Ebene über der höheren Ebene liegt.

13. Verfahren nach einem der Ansprüche 8 bis 12, bei dem das Datenaustausch-Protokoll ein multiprozessorfähiges Protokoll ist.

## Claims

1. Spinning machine control network for controlling a spinning machine group in a cooperation of several spinning machines, which themselves have a multitude of spinning stations, **characterized in that**,
(a) a communication level (level j; j=1...m) has a multiprocessor-able bus backplane (BPi;i=1...n) on which several components (Pk; k=1...p) are coupled with each other for exchanging data;
(b) each bus backplane (BPi) is connectable to one of the spinning machines and several bus backplanes (BP1,BP2,BP3) are coupled to a first hierarchical higher local bus (level j + 1) for a first local machine group, and this local bus is coupled to an even higher bus (level j + 2), whereas the first local bus and the several bus backplanes (BP1,BP2,BP3) are coupled via the same software protocol.

2. Control network according to claim 1 in which several bus backplanes (BPi) are provided with different architecture.

3. Control network according to claims 1 or 2 in which the bus backplane (BPi) is a multi-layer circuit, on which several slots are provided for the components, especially CPUs.

4. Control network according to one of the preceeding claims, in which one bus backplane (BPi) receives at least one spinning machine control and a yarn supervisor as components.

5. Control network according to one of the preceeding claims, wherein the higher bus (level j + 2) and the hierarchical higher bus (level j + 1) are network oriented for exchanging data and for coupling of measuring data and commands a line provided.

6. Control network according to one of the preceeding claims, in which on one bus backplane (BPi) the communication level of one spinning machine with a multitude of spinning stations is provided.

7. Control network according to one of the preceeding claims, in which several routers (R) couple several local busses to the higher network of which local busses each is coordinated to a machine group, for controlling all spinning machines of the spinning factory via the higher network (level j + 2).

8. **Method** for controlling a spinning machine group in an interconnection of several spinning machines, which themselves have a multitude of spinning stations, using a network control according to one of the preceeding claims, characterized in that, an exchange of data on several hierarchical different levels (j; j=1...m) is provided and the protocol for exchanging data and transmitting operational data and measuring data on a hierarchical higher level (level j + 1) is the protocol of a hierarchical lower level (level j).

9. Method according to claim 8 in which the protocol is a standard protocol, especially the TCP/IP protocol.

10. Method according to claim 8 or 9, in which the lower level (level j) as multiprocessor level has several CPUs, and the higher level (level j + 1) is coupled via a router (R) to an even higher level (level j + 2).

11. Method according to claim 10, in which the even higher level (level j + 2) of the data exchange is the level which is coupled with a system control as the host system.

12. Method according to claims 10 or 11, in which a CPU (P1) of the lower level (level j) with a control (C1) coupled to its bus (B1) is coupled to the net of the higher level (level j + 1) and/or via a separate router (R) to the net of the even higher level (level j + 2), whereas the even higher level is higher than the higher level.

13. Method according to one of the claims 8 to 12, in which the data exchange protocol is a multiprocessor-able protocol.

## Revendications

1. Réseau de commande de machines de filature destiné à la commande d'un groupe de machines de filature composé de plusieurs machines de filature comportant chacune une pluralité de postes de filage, caractérisé en ce
(a) qu'un niveau de communication (niveau j; j = 1...m) comporte un ,,backplane" de bus susceptible d'un multitraitement et sur lequel plusieurs parties constituantes (Pk; k = 1 ... p) sont reliées entre elles dans le but d'échanger des données;
(b) qu'à chaque "backplane" de bus (Bpi) une des machines de filature peut être connectée et que plusieurs "backplanes" de bus (BP1, BP2, BP3) sont reliés pour former un premier bus local d'un rang supérieur du point de vue hiérarchie (niveau j + 1) pour un premier groupe de machines local et que ce bus local est relié avec un autre bus situé encore plus haut dans la hiérarchie (niveau j + 2), le premier bus local et les plusieurs "backplanes" de bus (BP1, BP2, BP3) étant reliés par un protocole de logiciel identique.

2. Réseau de commande selon la revendication 1, dans lequel plusieurs "backplanes" de bus (BPi) d'architecture différente sont prévus.

3. Réseau de commande selon la revendication 1 ou 2, dans lequel le ,,backplane" de bus (BPi) est une platine multicouche sur laquelle une pluralité d'emplacements pour les composantes, notamment les UCs, sont prévus.

4. Réseau de commande selon l'une des revendications précédentes, dans lequel au moins une commande de machine de filature et un dispositif de contrôle de fil en tant de composantes peuvent être connectés à un "backplane" de bus (BPi).

5. Réseau de commande selon l'une des revendications précédentes, dans lequel le bus ayant un rang supérieur (niveau j + 2) et le bus ayant un rang supérieur du point de vue hiérarchie (niveau j + 1) sont connectés au réseau pour permettre l'échange de données, et qu'une ligne est prévue qui sert au couplage de valeurs mesurées et d'ordres.

6. Réseau de commande selon l'une des revendications précédentes, dans lequel se trouve sur un ,,backplane" de bus (BPi) respectif le niveau de communication d'un métier à filer respectif comportant une pluralité de postes de filage.

7. Réseau de commande selon l'une des revendications précédentes, dans lequel plusieurs routeurs (R) couplent plusieurs bus locaux, dont chacun est affecté à un groupe de machine, au réseau de rang supérieur afin d'y permettre la commande de toutes les machines de filature de la filature par l'intermédiaire du réseau de rang supérieur (niveau j + 2).

8. Procédé pour la commande d'un groupe de machines de filature composé de plusieurs machines de filature comportant chacune une pluralité de postes de filage, et qui se sert du réseau de commande selon l'une des revendications précédentes, caractérisé en ce que l'échange de données est prévu à plusieurs niveaux différents du point de vue hiérarchie (j; j = 1 ... m) et que le protocole d'échange de données servant à l'échange et au transfert de données de service et de valeurs mesurées d'un niveau de rang plus élevé du point de vue hiérarchie (niveau j + 1) est le protocole d'un niveau plus bas du point de vue hiérarchie (niveau j).

9. Procédé selon la revendication 8, dans lequel le protocole est un protocole standard, notamment le protocole "TCP / IP".

10. Procédé selon la revendication 8 ou 9, dans lequel le niveau plus bas (niveau j) , en tant de niveau de multitraitement, comporte une pluralité d'UCs et que le niveau supérieur (niveau j + 1) est couplé à un niveau de rang encore supérieur (niveau j + 2), par l'intermédiaire d'un routeur.

11. Procédé selon la revendication 10, dans lequel le niveau de rang supérieur (niveau j + 2) de l'échange de données est celui avec lequel la commande du système est couplé comme système "host".

12. Procédé selon la revendication 10 ou 11, dans lequel une UC (P1) du niveau plus bas (niveau j) a accès au réseau du niveau plus élevé (niveau j + 1), par l'intermédiaire d'une commande couplée à son bus (B1), et/ou au réseau du niveau supérieur (niveau j + 2), par l'intermédiaire d'un routeur (R) séparé, le niveau supérieur se trouvant au-dessus du niveau plus élevé.

13. Procédé selon l'une des revendications 8 à 12, dans lequel le protocole d'échange de données est un protocole susceptible de multitraitement.
